# EUROPEAN PATENT APPLICATION

(11) **EP 4 738 724 A1**
(43) Date of publication of application: **06.05.2026**
(21) Application number: 25207313.5
(22) Date of filing: 07.10.2025
(51) Int. Cl.: H04B 7/185

(54) **SYSTEM AND METHOD TO TRANSMIT ACARS MESSAGES RECEIVED ON ACARS OVER IP GATEWAY TO HANDHELD DEVICE OR PRIVATE CLOUD SERVER**

(30) Priority: 31.10.2024 IN 202411083600; 09.01.2025 US 202519014572
(71) Applicant: Honeywell International Inc., Charlotte, NC 28202 (US)
(72) Inventor: JAYARAMAIAH, Anil Sati, Charlotte, 28202 (US)
(74) Representative: Haseltine Lake Kempner LLP

(57) **Abstract**

A system comprises a communication management function (CMF) onboard an aircraft and configured to exchange datalink messages including ACARS messages, and CPDLC messages; and an onboard data gateway device in communication with the CMF. The data gateway device includes an ACARS over IP stack and a message decoder that communicates with the ACARS over IP stack. A ground server is configured for ACARS over IP messaging, with the ground server being in communication with the CMF through the data gateway device. At least one external device is in communication with the data gateway device. The external device comprises an onboard mobile device or a private cloud server. When ACARS over IP messages are exchanged between the CMF and the ground server, through the data gateway device, the messages are also routed from the gateway device to the external device comprising the onboard mobile device or the private cloud server.

## Description

### CROSS-REFERENCE TO RELATED APPLICATION

This application claims priority to Indian Application No. 202411083600 filed on October 31, 2024, same title herewith, the contents of which are incorporated herein in its entirety.

### BACKGROUND

The Aircraft Communications Addressing and Reporting System (ACARS) is a digital datalink system for transmission of messages between aircraft and ground stations via air band radio or satellite communications, such as very high frequency (VHF), high frequency (HF), or SATCOM systems. With the advent of ACARS over IP (Internet Protocol) communications, ACARS messages can be transmitted to ground messaging servers using Transmission Control Protocol (TCP)/(IP) instead of traditional routes using VHF, HF, or SATCOM systems. This is enabled through TCP/IP gateway devices, which receive the ACARS messages from a Communication Management Function (CMF) of an aircraft, and packages the messages into TCP/IP payloads for transmission.

### SUMMARY

A system comprises a communication management function (CMF) onboard an aircraft and configured to exchange datalink messages including aircraft communications addressing and reporting system (ACARS) messages, and controller pilot data link communications (CPDLC) messages; and a data gateway device onboard the aircraft and in operative communication with the CMF. The data gateway device includes an ACARS over internet protocol (IP) stack and a message decoder that operatively communicates with the ACARS over IP stack. A ground server is configured for ACARS over IP messaging, with the ground server being in operative communication with the CMF through the data gateway device. At least one external device is in operative communication with the data gateway device. The at least one external device comprises an onboard mobile device or a private cloud server. When one or more ACARS over IP messages are exchanged between the CMF and the ground server, through the data gateway device, the one or more ACARS over IP messages are also routed from the gateway device to the at least one external device comprising the onboard mobile device or the private cloud server.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for transmitting air/ground datalink messages, according to one embodiment;
Figure 2 is a flow diagram of a method for transmitting an uplink ACARS message, such as by using the system of Figure 1, according to one implementation;
Figure 3 is a flow diagram of a method for transmitting a downlink ACARS message, such as by using the system of Figure 1, according to another implementation;
Figure 4 is a flow diagram of a method for transmitting an ACARS uplink message, according to a further implementation; and
Figure 5 is a flow diagram of a method for transmitting an ACARS downlink message, according to an additional implementation.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for transmitting messages received on and ACARS over IP gateway, to handheld devices or private cloud servers, are described herein.

The present approach can be employed in an ACARS over IP (AoIP) system, which transmits ACARS messages to/from an aircraft over TCP/IP. The ACARS messages pass through an AoIP gateway device, such as an Integrated Network Server Unit (INSU), which acts as a connectivity bridge for data flows into and out of the aircraft. These ACARS messages can also be captured and transmitted to an external device, such as handheld or mobile devices, which can include an electronic flight bag (EFB) on a tablet or smart phone, as well as private cloud servers such as owned by airlines.

With the ACARS data passing through TCP/IP gateways, there is a large quantity of data available on the gateway ports that can be applied to various use cases. Such data can be accessed and used for pilot, copilot, or crew benefits. The ACARS messages transmitted to an onboard mobile device, or to an airline cloud server, provides flexibility for use by the pilot, copilot, or crew of an aircraft.

Such flexibility allows for pilot/copilot/crew to have ACARS messages and the logs related thereto on a handheld device, and for airlines to have aircraft tail number-wise ACARS logs of the ACARs messages in a complete fleet available in the cloud. In addition, a log of the ACARS messages by an aircraft can be transferred to a cloud server from the handheld device for storage. Further, constant analysis of uplink/downlink ACARS messages of a flight on a mobile device or cloud server can be used to identify any pilot or copilot action anomalies.

The various ACARS messages referred herein can include at least the following types of messages: Air Traffic Control (ATC) messages, Aeronautical Operational Control (AOC) messages, and Airline Administrative Control (AAC) messages. The ATC messages can include Controller Pilot Data Link Communications (CPDLC) messages, by which air traffic controllers can communicate with pilots over a datalink system.

The gateway device employed in the present system can be configured to provide a local wireless access point (WAP) either through the IEEE 802.11 standard (Wi-Fi) or the Bluetooth standard. The handheld devices can connect to the gateway device over the local WAP, through which the ACARS data from an AoIP stack are transmitted to the handheld devices, which include suitable software applications to process the received ACARS messages. The gateway device also has the ability to communicate with a private cloud server, such as an airline cloud server, so that ACARS data passing over the AoIP gateway are also transferred to the cloud server. The cloud server can include micro services operative to receive and process ACARS messages from the a AoIP gateway over network connectivity.

The gateway device can also be configured to provide a wireless internet connection through a 4G or 5G cellular mobile data connection, or an airport Wi-Fi or WiIMAX network, such as through which communications with the cloud server can be done. For example, the Aeronautical Mobile Airport Communication System (AeroMACS) can be employed, which based on the on the WiMAX standard (IEEE 802.16e). In addition, cyber security can be ensured through use of encryption/decryption, signing and certificates, to prevent malicious activity from being performed.

Once the ACARs data is available on an external handheld device or a cloud server, the data can be used in various ways. For example, the data can be translated to a natural language (human readable language) of preference for easy understanding and flexibility for use by pilots, copilots, crew members, airliners, or the like. In addition, the data can be used to provide a graphical representation of an ACARS message, such as on a mobile device used inside a cockpit. For example, a graphical representation of an ACARS message on a handheld device can include a Terminal Weather Information for Pilots System (TWIP) text message, which is converted to a graphical weather display on the handheld device. In addition, any maintenance crew in the vicinity of an aircraft's wireless access point can receive ACARS data in a handheld device.

The ACARS messages exchanged between a communication management system of an aircraft and ATC can be pushed to a private cloud server that is configured by an airlines. The ACARS messages can be stored on the cloud server and can be graphically displayed, such as weather information. The data can also be provided for access by third party subscribers, such as in a cloud subscription model, which allows remote access to ACARS messages by ground operators or small aircraft. The subscription model can allow accessing of ACARS messages based on an aircraft tail number from anywhere in the world, and can provide ACARS information such as weather and terminal information.

The received ACARS messages, and corresponding pilot/copilot actions, can be tracked and subjected to analysis, and an alert can be raised on the handheld devices if anomalies are found. In addition, the ACARS messages stored on the cloud can be continuously monitored for each aircraft in a fleet, and alerts can be raised if anomalies are found.

Further details of various embodiments are described hereafter and with reference to the drawings.

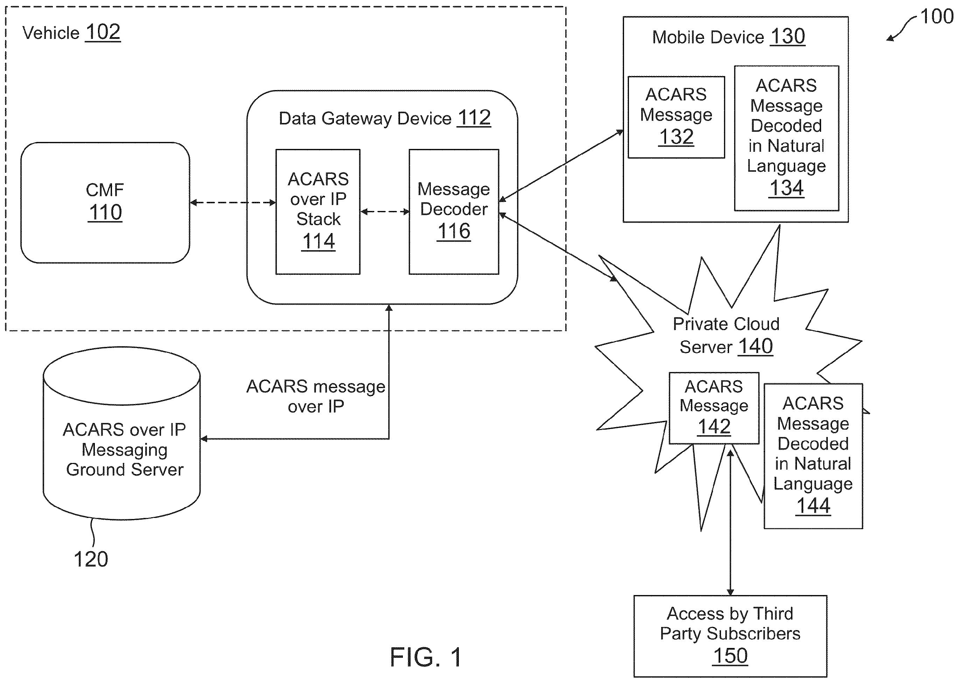

Figure 1 is a block diagram of a system 100 for transmitting air/ground datalink messages, according to one embodiment. The system 100 can be implemented for use with a vehicle 102, such as an aircraft. The system 100 comprises a communication management function (CMF) 110 onboard vehicle 102, and a data gateway device 112 onboard vehicle 102 that is in operative communication with CMF 110. The CMF 110 is configured to exchange datalink messages including ACARS messages with a ground station having a ground server 120 configured for ACARS over IP messaging.

The data gateway device 112 includes one or more processors that host an ACARS over IP (AoIP) stack module 114, and a message decoder 116 that operatively communicates with AoIP stack module 114. The data gateway device 112 is configured to provide internet connectivity, such as through cellular mobile data (e.g., 4G, 5G), Wi-Fi, SATCOM, AeroMACS, or the like.

The AoIP stack module 114 is configured to collect the ACARS messages from CMF 110 and convert the messages to ACARS over IP format. The message decoder 116 is configured to receive the ACARS over IP messages from the AoIP stack and transmit the messages to external systems, such as mobile devices or cloud servers, using network connectivity, such as a local hotspot or the internet.

The ground server 120 is in operative communication with CMF 110 through data gateway device 112. A mobile device 130 and/or a private cloud server 140 can be in operative communication with data gateway device 112.

The data gateway device 112 is configured to provide a local access point to which mobile device 130, or private cloud server 140, can be connected to received ACARS messages. The mobile device 130 can be a tablet, smart phone, EFB, or the like, which is accessible by a user such as a pilot, copilot, maintenance crew member, or other flight personnel. The private cloud server 140 can be operated by an airline, for example. When an ACARS message over IP is exchanged between CMF 110 and ground server 120, through data gateway device 112, the ACARS message over IP is also routed from data gateway device 112 to mobile device 130 and/or private cloud server 140.

When the ACARS message over IP is routed to mobile device 130 through data gateway device 112, the received ACARS message (block 132) can be decoded and translated to a natural language (block 134), as selected by a user of mobile device 130. In one embodiment, the ACARS message can be displayed, side by side, with the ACARS message translated to the natural language, on a display screen of mobile device 130.

Alternatively, the ACARS message can also be converted to a graphical representation for display on the screen of mobile device 130. For example, a ACARS TWIP text message looks as below:
MCO 1800
TERMINAL WEATER
   - STORM(S)
2NM N-E MOD PRECIP
5NM NE HVY PRECIP
MOVG W AT 10KT
EXPECTED MOD PRECIP
BEGIN 1905
The above message represents weather data at that region, which can be converted and represented on a map graphically showing wind speeds, precipitation at that region.

In addition, the ACARS message received by mobile device 130 can also be used for flight operations, including fight planning and management, by a pilot or co-pilot. The ACARS message received by mobile device 130 can also transferred to ground server 120.

When the ACARS message over IP is routed to private cloud server 140 through data gateway device 112, the received ACARS message (block 142) can be decoded and translated to a natural language for storage (block 144). The received ACARS message can also be converted to a graphical representation and stored in private cloud server 140.

In one embodiment, the ACARS message routed to private cloud server 140 can also be accessible by other users such as third-party subscribers (block 150). For example, third-party subscribers can include smaller aircraft without a CMF, uncrewed aerial vehicles, or ground operators.

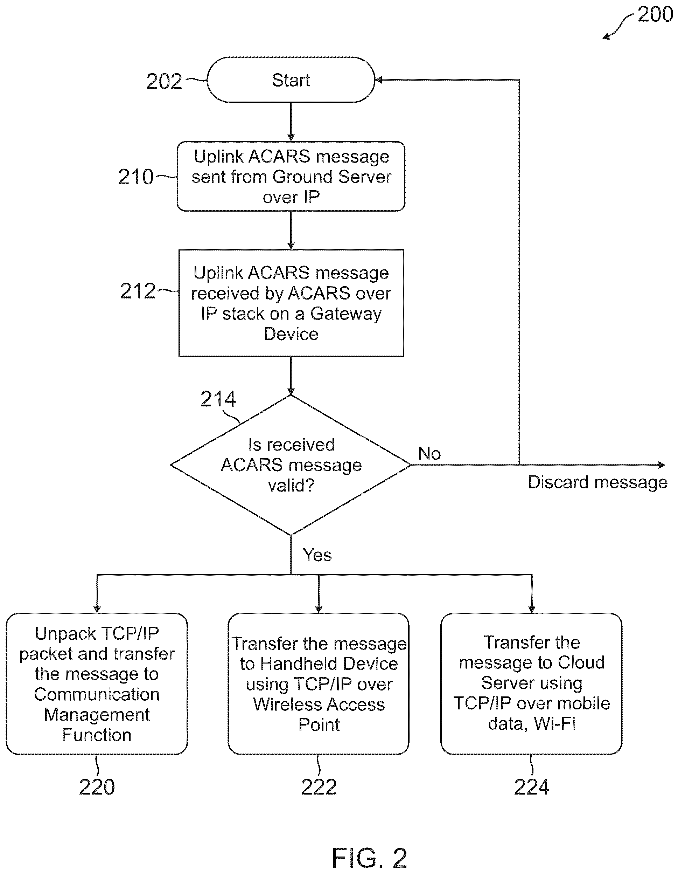

Figure 2 is a flow diagram of a method 200 for transmitting an uplink ACARS message, such as by using system 100. After a start 202 of method 200, an uplink ACARS message is sent from a ground server over IP (block 210), such as from ground server 120. The uplink ACARS message is received by an ACARS over IP stack on a gateway device (block 212), such as by AolP stack module 114 on data gateway device 112. A determination is then made whether the received uplink ACARS message is valid (block 214). The validity of ACARS messages can be confirmed based on the following items: the messages adhere to the A618, A619, A620 protocol formats correctly; the messages are being received in the correct sequence; and/or the messages correctly co-relate to an actual aircraft state.

If the received uplink ACARS message is determined to be invalid, the message is discarded and method 200 returns to start 202. If the received uplink ACARS message is determined to be valid, then method 200 can proceed with the following steps.

In a first step when the received uplink ACARS message is valid, method 200 unpacks a TCP/IP packet for the message, and transfers the message to a communication management function (CMF) of the aircraft (block 220), such as CMF 110. In a next step when the received uplink ACARS message is valid, method 200 can transfer the message to a handheld device, such mobile device 130, using TCP/IP over a wireless access point (block 222). In addition, or alternatively, when the received uplink ACARS message is valid, method 200 can transfer the message to a cloud server, such as private cloud server 140, using TCP/IP over mobile data, Wi-Fi, or the like (block 224).

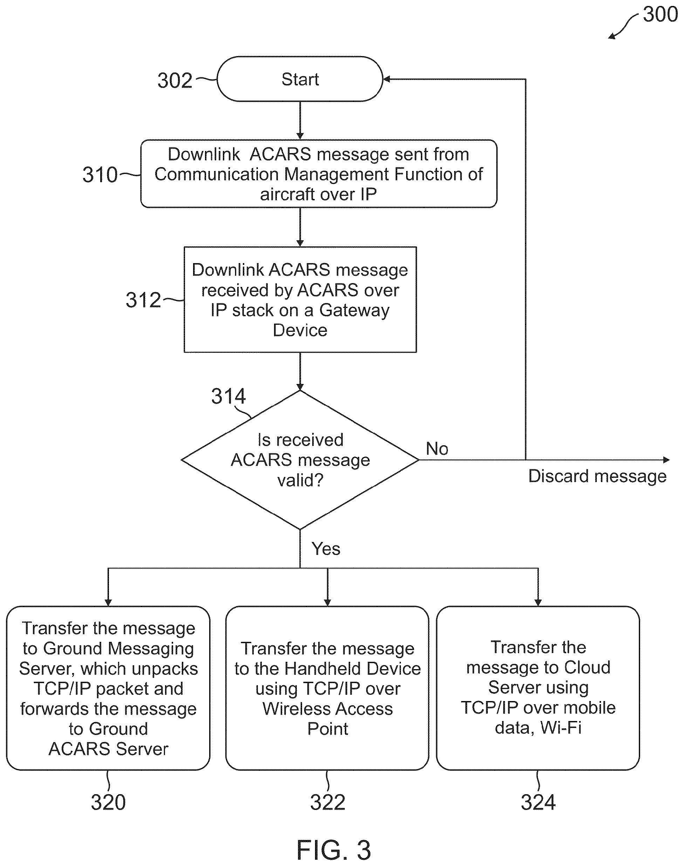

Figure 3 is a flow diagram of a method 300 for transmitting a downlink ACARS message, such as by using system 100. After a start 302 of method 300, a downlink ACARS message is sent from a communication management function of an aircraft over IP (block 310), such as from CMF 110. The downlink ACARS message is received by an ACARS over IP stack on a gateway device (block 312), such as by AoIP stack module 114 on data gateway device 112. A determination is then made whether the received downlink ACARS message is valid (block 314).

If the received downlink ACARS message is determined to be invalid, the message is discarded and method 300 returns to start 302. If the received downlink ACARS message is determined to be valid, then method 300 can proceed with the following steps.

In a first step when the received downlink ACARS message is valid, method 300 transfers the message to a ground messaging server, which unpacks a TCP/IP packet and forwards the message to a ground ACARS server (block 320), such as ground server 120. In a next step when the received downlink ACARS message is valid, method 300 can transfer the message to a handheld device, such mobile device 130, using TCP/IP over a wireless access point (block 322). In addition, or alternatively, when the received downlink ACARS message is valid, method 300 can transfer the message to a cloud server, such as private cloud server 140, using TCP/IP over mobile data, Wi-Fi, or the like (block 324).

In some implementations, ACARS over IP messages that are routed to onboard mobile devices can be subjected to data analytics against an actual avionics state, using artificial intelligence or machine learning techniques, to identify discrepancies by pilot operations and raise an alert. In addition, ACARS over IP messages from aircraft in a fleet that are routed to a private cloud server can be subjected to data analytics, using artificial intelligence or machine learning techniques, to identify discrepancies and raise an alert. For example, uplink ACARS messages include a set of data sent from ground to the aircraft for the pilot to perform certain actions in the aircraft, which will alter the aircraft state. The pilot may perform wrong actions versus the actual ACARS message received, so the data analytic techniques can be applied on the received ACARS message against the aircraft state to determine any error.

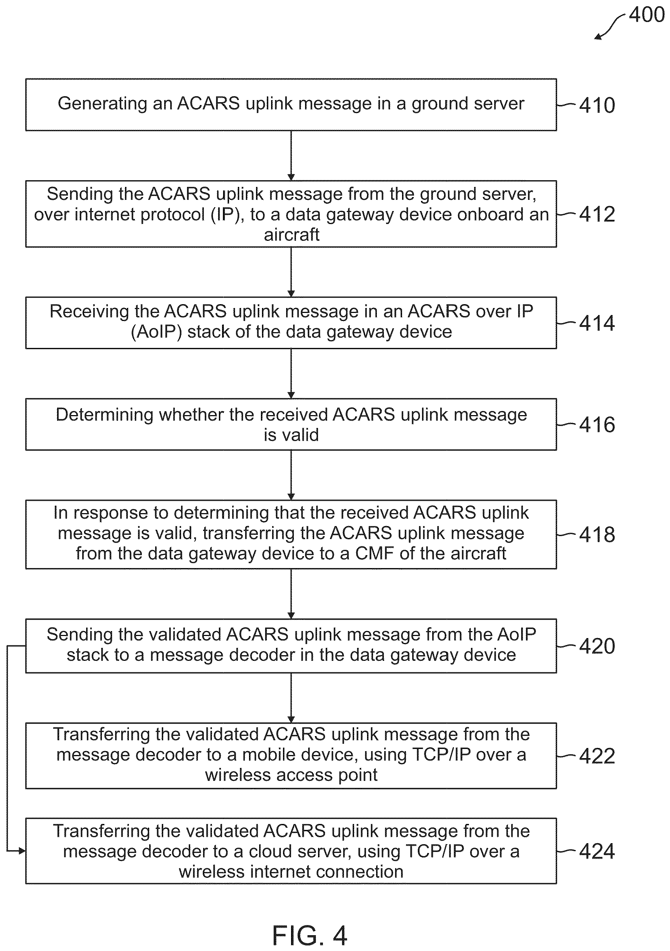

Figure 4 is a flow diagram of a method 400 for transmitting an ACARS uplink message, according to another implementation of the present approach. The method 400 comprises generating an ACARS uplink message in a ground server (block 410); sending the ACARS uplink message from the ground server, over internet protocol (IP), to a data gateway device onboard an aircraft (block 412); and receiving the ACARS uplink message in an ACARS over IP (AoIP) stack of the data gateway device (block 414). The method 400 then determines whether the received ACARS uplink message is valid (block 416). In response to determining that the received ACARS uplink message is valid, method 400 transfers the ACARS uplink message from the data gateway device to a CMF of the aircraft (block 418); and sends the validated ACARS uplink message from the AoIP stack to a message decoder in the data gateway device (block 420).

The method 400 can then transfer the validated ACARS uplink message from the message decoder to a mobile device, using TCP/IP over a wireless access point (block 422), such as by Wi-Fi, Bluetooth, or the like. The transferred ACARS uplink message on the mobile device can be translated to a natural language selected by a user of the mobile device. The translated ACARS uplink message can be displayed side by side with the transferred ACARS uplink message, on a screen of the mobile device. Alternatively, the transferred ACARS uplink message can be converted to a graphical representation and displayed on a screen of the mobile device.

In addition, or alternatively, method 400 can transfer the validated ACARS uplink message from the message decoder to a cloud server, using TCP/IP over a wireless internet connection (block 424), such as a cellular mobile data connection, airport Wi-Fi, or a WiMAX network. The transferred ACARS uplink message on the cloud server can be translated to a natural language, or converted to a graphical representation, and stored. In addition, the transferred ACARS uplink message on the cloud server can be accessible by one or more third-party users through a subscription service.

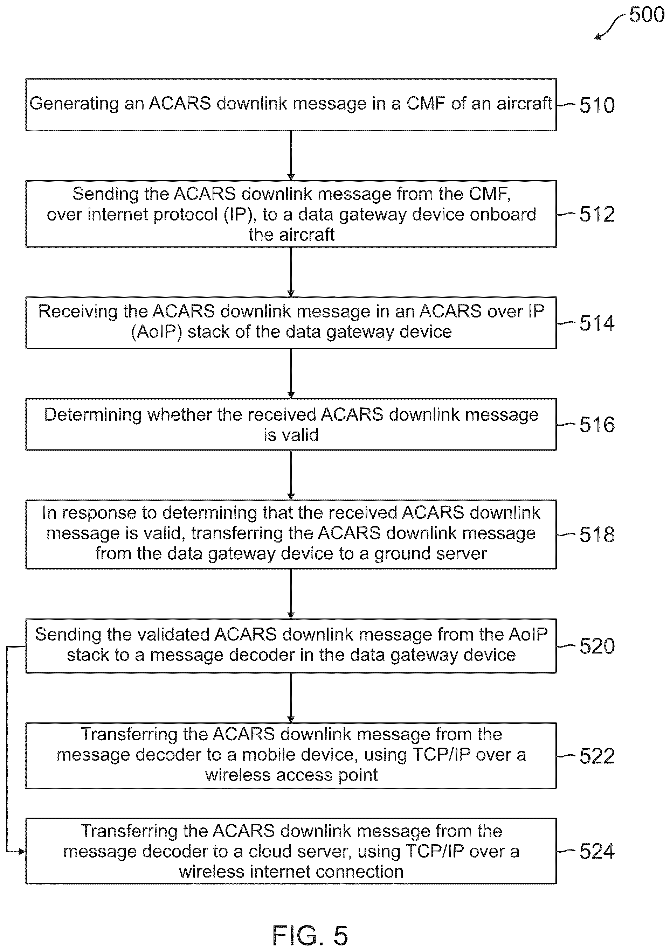

Figure 5 is a flow diagram of a method 500 for transmitting an ACARS downlink message, according to a further implementation of the present approach. The method 500 comprises generating an ACARS downlink message in a CMF of an aircraft (block 510); sending the ACARS downlink message from the CMF, over internet protocol (IP), to a data gateway device onboard the aircraft (block 512); and receiving the ACARS downlink message in an ACARS over IP (AoIP) stack of the data gateway device (block 514). The method 500 then determines whether the received ACARS downlink message is valid (block 516). In response to determining that the received ACARS downlink message is valid, method 500 transfers the ACARS downlink message from the data gateway device to a ground server (block 518). The method 500 sends the validated ACARS downlink message from the AoIP stack to a message decoder in the data gateway device (block 520).

The method 500 can then transfer the validated ACARS downlink message from the message decoder to a mobile device, using TCP/IP over a wireless access point (block 522), such as by Wi-Fi, Bluetooth, or the like. The transferred ACARS downlink message on the mobile device can be translated to a natural language selected by a user of the mobile device. The translated ACARS downlink message can be displayed side by side with the transferred ACARS downlink message, on a screen of the mobile device. Alternatively, the transferred ACARS downlink message can be converted to a graphical representation and displayed on a screen of the mobile device.

In addition, or alternatively, method 500 can transfer the validated ACARS downlink message from the message decoder to a cloud server, using TCP/IP over a wireless internet connection (block 524), such as a cellular mobile data connection, airport Wi-Fi, or a WiMAX network. The transferred ACARS downlink message on the cloud server can be translated to a natural language, or converted to a graphical representation, and stored. In addition, the transferred ACARS downlink message on the cloud server can be accessible by one or more third-party users through a subscription service.

The processing units and/or other computational devices used in the method and system described herein may be implemented using software, firmware, hardware, or appropriate combinations thereof. The processing unit and/or other computational devices may be supplemented by, or incorporated in, specially-designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: a communication management function (CMF) onboard an aircraft and configured to exchange datalink messages including aircraft communications addressing and reporting system (ACARS) messages, and controller pilot data link communications (CPDLC) messages; a data gateway device onboard the aircraft and in operative communication with the CMF, the data gateway device including an ACARS over internet protocol (IP) stack and a message decoder that operatively communicates with the ACARS over IP stack; a ground server configured for ACARS over IP messaging, the ground server in operative communication with the CMF through the data gateway device; and at least one external device in operative communication with the data gateway device, the at least one external device comprising an onboard mobile device or a private cloud server; wherein when one or more ACARS over IP messages are exchanged between the CMF and the ground server, through the data gateway device, the one or more ACARS over IP messages are also routed from the gateway device to the at least one external device comprising the onboard mobile device or the private cloud server.

Example 2 includes the system of Example 1, wherein: the data gateway device is configured to provide Internet connectivity via cellular mobile data, Wi-Fi, SATCOM, or AeroMACS; and the data gateway device is configured to provide a local access point to which the onboard mobile device can connect.

Example 3 includes the system of any of Examples 1-2, wherein when the one or more ACARS over IP messages are routed to the onboard mobile device, the one or more ACARS over IP messages are translated to a natural language selected by a user of the onboard mobile device, wherein the user comprises a pilot, a co-pilot, or a maintenance crew.

Example 4 includes the system of Example 3, wherein the one or more ACARS over IP messages are displayed, along with the one or more ACARS over IP messages translated to a natural language, side by side on a display screen of the onboard mobile device.

Example 5 includes the system of any of Examples 1-4, wherein when the one or more ACARS over IP messages are routed to the onboard mobile device, the one or more ACARS over IP messages are converted to a graphical representation for display on the onboard mobile device.

Example 6 includes the system of any of Examples 1-5, wherein when the one or more ACARS over IP messages are routed to the private cloud server, the one or more ACARS over IP messages are translated to a natural language and stored.

Example 7 includes the system of any of Examples 1-6, wherein when the one or more ACARS over IP messages are routed to the private cloud server, the one or more ACARS over IP messages are converted to a graphical representation and stored.

Example 8 includes the system of any of Examples 1-7, wherein when the one or more ACARS over IP messages are received on the onboard mobile device, the one or more ACARS over IP messages are also transferred to the ground server from the onboard mobile device.

Example 9 includes the system of any of Examples 1-8, wherein the one or more ACARS over IP messages that are routed to the private cloud server are also accessible by third-party users who are subscribed to the private cloud server, the third-party users comprised of smaller aircraft without a CMF, uncrewed aerial vehicles, or ground operators.

Example 10 includes the system of any of Examples 1-9, wherein when the one or more ACARS over IP messages are routed to the onboard mobile device, the one or more ACARS over IP messages are used for flight operations, including fight planning and management, on the onboard mobile device by a pilot or a co-pilot.

Example 11 includes a method comprising: generating an aircraft communications addressing and reporting system (ACARS) uplink message in a ground server; sending the ACARS uplink message from the ground server, over internet protocol (IP), to a data gateway device onboard an aircraft; receiving the ACARS uplink message in an ACARS over IP (AoIP) stack of the data gateway device; determining whether the received ACARS uplink message is valid; in response to determining that the received ACARS uplink message is valid, the method further comprises: transferring the ACARS uplink message from the data gateway device to a communication management function (CMF) of the aircraft; and sending the ACARS uplink message from the AoIP stack to a message decoder in the data gateway device; wherein the method further comprises: transferring the ACARS uplink message from the message decoder to a mobile device, using transmission control protocol (TCP)/IP over a wireless access point; or transferring the ACARS uplink message from the message decoder to a cloud server, using TCP/IP over a wireless internet connection.

Example 12 includes the method of Example 11, wherein: the transferred ACARS uplink message on the mobile device is translated to a natural language selected by a user of the mobile device; or the transferred ACARS uplink message is converted to a graphical representation and displayed on a screen of the mobile device.

Example 13 includes the method of Example 12, wherein the translated ACARS uplink message is displayed side by side with the transferred ACARS uplink message, on a screen of the mobile device.

Example 14 includes the method of any of Examples 11-13, wherein the transferred ACARS uplink message on the cloud server is translated to a natural language, or converted to a graphical representation, and stored.

Example 15 includes the method of any of Examples 11-14, wherein the transferred ACARS uplink message on the cloud server is accessible by one or more third-party users through a subscription service.

Example 16 includes a method comprising: generating an aircraft communications addressing and reporting system (ACARS) downlink message in a communication management function (CMF) of an aircraft; sending the ACARS downlink message from the CMF, over internet protocol (IP), to a data gateway device onboard the aircraft; receiving the ACARS downlink message in an ACARS over IP (AoIP) stack of the data gateway device; determining whether the received ACARS downlink message is valid; in response to determining that the received ACARS downlink message is valid, the method further comprises: transferring the ACARS downlink message from the data gateway device to a ground server; and sending the ACARS downlink message from the AoIP stack to a message decoder in the data gateway device; wherein the method further comprises: transferring the ACARS downlink message from the message decoder to a mobile device, using transmission control protocol (TCP)/IP over a wireless access point; or transferring the ACARS downlink message from the message decoder to a cloud server, using TCP/IP over a wireless internet connection.

Example 17 includes the method of Example 16, wherein: the transferred ACARS downlink message on the mobile device is translated to a natural language selected by a user of the mobile device; or the transferred ACARS downlink message is converted to a graphical representation and displayed on a screen of the mobile device.

Example 18 includes the method of Example 17, wherein the translated ACARS downlink message is displayed side by side with the transferred ACARS downlink message, on a screen of the mobile device.

Example 19 includes the method of any of Examples 16-18, wherein the transferred ACARS downlink message on the cloud server is translated to a natural language, or converted to a graphical representation, and stored.

Example 20 includes the method of any of Examples 16-19, wherein the transferred ACARS downlink message on the cloud server is accessible by one or more third-party users through a subscription service.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
a communication management function (CMF) onboard an aircraft and configured to exchange datalink messages including aircraft communications addressing and reporting system (ACARS) messages, and controller pilot data link communications (CPDLC) messages;
a data gateway device onboard the aircraft and in operative communication with the CMF, the data gateway device including an ACARS over internet protocol (IP) stack and a message decoder that operatively communicates with the ACARS over IP stack;
a ground server configured for ACARS over IP messaging, the ground server in operative communication with the CMF through the data gateway device; and
at least one external device in operative communication with the data gateway device, the at least one external device comprising an onboard mobile device or a private cloud server;
wherein when one or more ACARS over IP messages are exchanged between the CMF and the ground server, through the data gateway device, the one or more ACARS over IP messages are also routed from the gateway device to the at least one external device comprising the onboard mobile device or the private cloud server.

2. The system of claim 1, wherein:
the data gateway device is configured to provide Internet connectivity via cellular mobile data, Wi-Fi, SATCOM, or AeroMACS; and
the data gateway device is configured to provide a local access point to which the onboard mobile device can connect.

3. The system of claim 1, wherein when the one or more ACARS over IP messages are routed to the onboard mobile device:
the one or more ACARS over IP messages are translated to a natural language selected by a user of the onboard mobile device, wherein the user comprises a pilot, a co-pilot, or a maintenance crew; or
the one or more ACARS over IP messages are converted to a graphical representation for display on the onboard mobile device.

4. The system of claim 3, wherein the one or more ACARS over IP messages are displayed, along with the one or more ACARS over IP messages translated to a natural language, side by side on a display screen of the onboard mobile device.

5. The system of claim 1, wherein when the one or more ACARS over IP messages are routed to the private cloud server:
the one or more ACARS over IP messages are translated to a natural language and stored; or
the one or more ACARS over IP messages are converted to a graphical representation and stored.

6. The system of claim 1, wherein when the one or more ACARS over IP messages are received on the onboard mobile device, the one or more ACARS over IP messages are also transferred to the ground server from the onboard mobile device.

7. The system of claim 1, wherein the one or more ACARS over IP messages that are routed to the private cloud server are also accessible by third-party users who are subscribed to the private cloud server, the third-party users comprised of smaller aircraft without a CMF, uncrewed aerial vehicles, or ground operators.

8. The system of claim 1, wherein when the one or more ACARS over IP messages are routed to the onboard mobile device, the one or more ACARS over IP messages are used for flight operations, including fight planning and management, on the onboard mobile device by a pilot or a co-pilot.

9. A method comprising:
generating an aircraft communications addressing and reporting system (ACARS) uplink message in a ground server;
sending the ACARS uplink message from the ground server, over internet protocol (IP), to a data gateway device onboard an aircraft;
receiving the ACARS uplink message in an ACARS over IP (AoIP) stack of the data gateway device;
determining whether the received ACARS uplink message is valid;
in response to determining that the received ACARS uplink message is valid, the method further comprises:
transferring the ACARS uplink message from the data gateway device to a communication management function (CMF) of the aircraft; and
sending the ACARS uplink message from the AoIP stack to a message decoder in the data gateway device;
wherein the method further comprises:
transferring the ACARS uplink message from the message decoder to a mobile device, using transmission control protocol (TCP)/IP over a wireless access point; or
transferring the ACARS uplink message from the message decoder to a cloud server, using TCP/IP over a wireless internet connection.

10. A method comprising:
generating an aircraft communications addressing and reporting system (ACARS) downlink message in a communication management function (CMF) of an aircraft;
sending the ACARS downlink message from the CMF, over internet protocol (IP), to a data gateway device onboard the aircraft;
receiving the ACARS downlink message in an ACARS over IP (AoIP) stack of the data gateway device;
determining whether the received ACARS downlink message is valid;
in response to determining that the received ACARS downlink message is valid, the method further comprises:
transferring the ACARS downlink message from the data gateway device to a ground server; and
sending the ACARS downlink message from the AoIP stack to a message decoder in the data gateway device;
wherein the method further comprises:
transferring the ACARS downlink message from the message decoder to a mobile device, using transmission control protocol (TCP)/IP over a wireless access point; or
transferring the ACARS downlink message from the message decoder to a cloud server, using TCP/IP over a wireless internet connection.
